# EUROPEAN PATENT SPECIFICATION

(11) **EP 2 542 130 B1**
(45) Date of publication and mention of the grant of the patent: **26.03.2014**
(21) Application number: 11705619.2
(22) Date of filing: 01.03.2011
(51) Int. Cl.: A47J 31/60

(54) **A DEVICE FOR DISABLING FLOW SHUT-OFF SELECTOR MEMBERS FOR PERCOLATING FILTER SYSTEMS AND A KIT INCLUDING SAID DEVICE**
VORRICHTUNG ZUR DEAKTIVIERUNG VON STRÖMUNGSABSPERRENDEN WAHLSCHALTERELEMENTEN FÜR PERKOLATIONSFILTERSYSTEME UND KIT MIT DIESER VORRICHTUNG
DISPOSITIF POUR DÉSACTIVER LES ÉLÉMENTS SÉLECTEURS D'ARRÊT D'ÉCOULEMENT POUR LES SYSTÈMES DE FILTRE À PERCOLATION ET KIT COMPRENANT LEDIT DISPOSITIF

(30) Priority: 05.03.2010 IT PD20100068
(43) Date of publication of application: 09.01.2013
(73) Proprietor: Laica S.p.A., 36021 Barbarano Vicentino (VI) (IT)
(72) Inventor: MORETTO, Maurizio, 36100 Vicenza (IT)
(74) Representative: Locas, Davide
(86) International application number: PCT/EP2011/053051
(87) International publication number: WO 2011/107488

(56) References cited:
- EP-A1- 1 576 997
- EP-A1- 2 095 749
- EP-A2- 1 136 110
- WO-A1-2009/015679
- WO-A1-2010/081845
- DE-A1-102008 010 914
- US-A- 3 561 506

## Description

Filter systems such as filter jugs, teapots and kettles using percolating filter systems for filtering water for human consumption are in widespread use. These systems are based on the use of replaceable filter cartridges which, when fitted in suitable seats in such a way that the flow of water to be treated passes through them, remove contaminants and disagreeable odours and tastes from the water by means of ion exchange and active carbon filters. In a type of jug which has recently appeared on the market, the cartridge seat has a required passage in which is placed a valve selector member whose plug is opened only when an actuating projection of the plug interferes with a counter-projection fixed to the cartridge, such as the one described in WO 2010/081845.

Although this system is functional and offers some benefits, it has the serious drawback that not all cartridges are provided (or can be provided) with appropriate counter-projections to ensure the efficient opening of the plug. In such cases, the cartridge, when fitted into its seat, may open the valve member to an inadequate degree or may not open it at all, as a result of which the filter jug will fail to operate or will operate incorrectly.

On the other hand, the end user may be obliged to procure cartridges (or may already have stocks of cartridges) which do not have the counter-projections for opening the aforesaid plug. In such cases, the user must either discard the cartridges supplied to him or tamper with the valve system of the jug, which is clearly inadvisable.

In these cases, it is provided a device for disabling the selector member, also described in WO 2010/081845, in a form structurally independent of the cartridge.

Other examples of devices for disabling the selector member in filtering systems are described in EP 2095749 o DE 10 2008 010914. Nevertheless, such devices are hardly suitable for being used in percolating systems since they do not allow to precisely e steadily place the disabling device.

The problem addressed by the present invention is that of providing a device structurally and functionally designed to overcome all the drawbacks noted with reference to the cited prior art. Within the scope of this problem, one object of the invention is to achieve the aforesaid outcome without irreversibly tampering with the filter system and without harming the operation of the system with different filter cartridges.

This problem is resolved and this object is achieved by the invention by means of a kit in accordance with the appended claims.

The features and advantages of the invention will become clear from the following detailed description of some examples of embodiment thereof, illustrated, for the purposes of guidance and in a non-limiting way, with reference to the appended drawings, in which:
- Fig. 1 is a sectional view of a divider element of a filter device made in accordance with the prior art;
- Fig. 2 is a detail, on an enlarged scale, of the device according to the invention;
- Figures 3 to 10 show the detail of Fig. 2 in eight variant embodiments. For clarity, the selector member has been omitted in some of these;
- Figures 11 and 12 are sectional views, with parts detached and in the operating state respectively, of a further variant of the invention shown in a schematic view corresponding to the detail shown in Figure 2; and

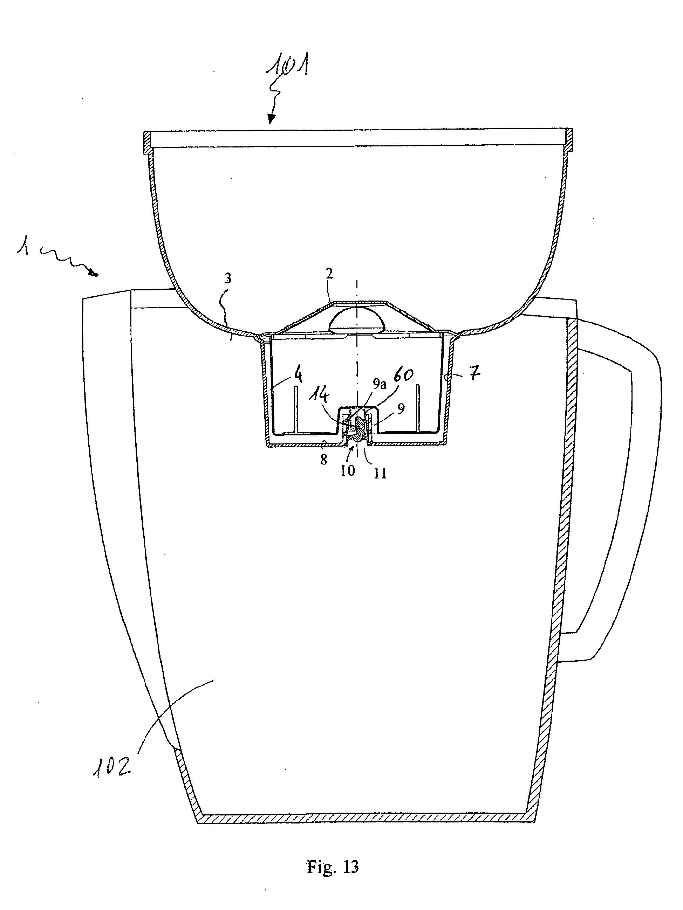

- Figure 13 is a sectional view of a percolating filter jug with the device according to the present invention installed.

In all the figures, identical or technically equivalent parts are indicated by the same reference numerals. The number 1 indicates the whole of a percolating filter device such as a jug with a replaceable cartridge filter 2. The filter device 1 comprises a divider element 3 which creates a separation between a first 101 and a second 102 bowl for collecting, respectively, the water to be filtered and the filtered water. This element 3 is normally shaped in the form of a funnel (or hopper) and is housed in a jug such as that described in WO2009-012832.

A seat 4 for housing the cartridge 2 is defined in the divider element 3. The seat 4 includes an annular recess 5 in which an annular seal 6 of the cartridge 2 is removably housed in a liquid-tight way, in such a way that, when the cartridge 2 is fitted in the seat 4, the entire flow of liquid to be filtered is forced to pass through the filter bed contained in the cartridge 2. The seat 4 also comprises a lateral wall 7 and a base wall 8. A tube 9 extends from the base wall 8 into the seat 4 to form a required flow passage 10 which all, or at least the greater part, of the flow of filtered liquid leaving the cartridge 2 has to pass through. In the proximity of its free upper end, the tube 9 has a constriction 9a formed by an annular projection having an essentially triangular cross section. A valve selector member 11 including a valve seat 12 and a plug 13 is placed in the required passage 10. The plug 13 has an actuating projection 14 extending in the required passage 10.

According to the prior art, the projection 14 is designed to interfere with a portion of the casing of the cartridge 2 which is in a position such that it extends into the required passage 10, when the cartridge 2 is fitted into its seat, so as to interfere with the actuating projection 14 in order to tilt the plug 13 into a position in which the corresponding seat 12 is open and keep it there.

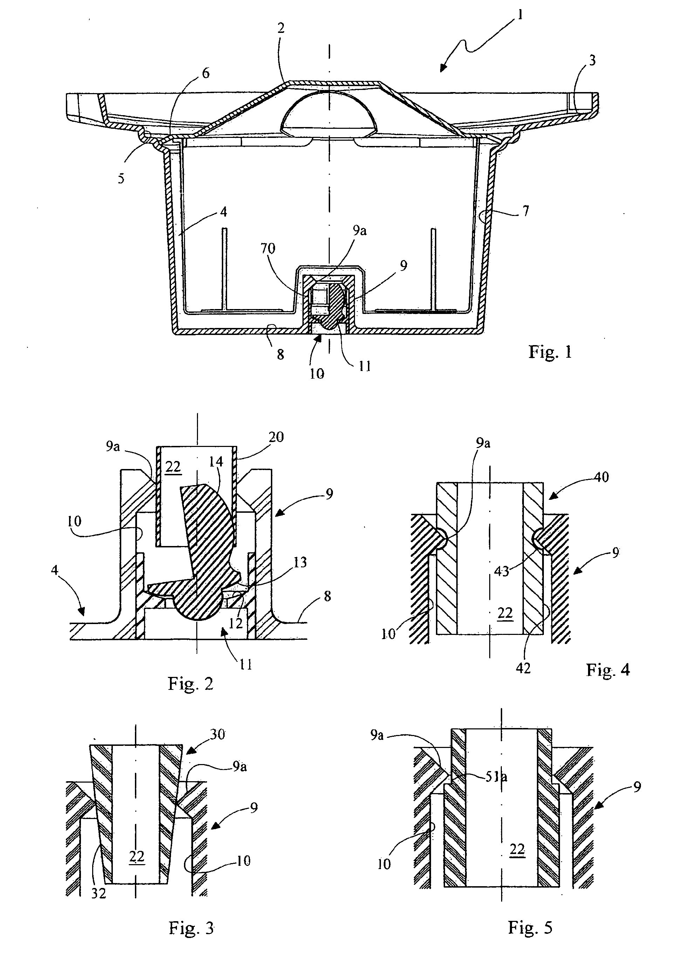

In this way, the valve selector member 11 acts as a valve selector for shutting off the flow through the cartridge 2, thus enabling the jug to function only when the cartridge is "recognized" by the filter system. Clearly, if for any reason the cartridge 2 is not provided, or cannot be provided, with this special projecting portion for interfering with the actuating projection 14 of the plug (for example, because of a requirement to adapt the cartridge to other shapes of seat with which compatibility is desired), the plug will continue to close the seat under its own weight (as shown in Figure 1) or under the action of spring means which are not shown (such as a helical spring which presses the plug on to the seat 12 so as to close it), thus preventing the operation of the filter system, because the filtered water cannot flow out through the required passage.

By contrast with the above system, it is provided a device for disabling the aforesaid selector members, including a counter-projection 20 which is structurally independent of the cartridge and of its casing, and which can be manipulated manually so that, when fitted into the required passage 10, it can interfere with the actuating projection 14 in order to keep the plug 13 in the open position of the corresponding selector member.

Thus the selector member is opened regardless of the presence or absence of the cartridge 2 in the seat 4.

A first, simplified, embodiment of the counter-projection 20 is shown in Fig. 2. In this case, the counter-projection is cylindrical and tubular with a circular cross section (although it could have quite a different shape such as that of a strip or star shape, or could have a polygonal cross section, for example), which is inserted with a small degree of interference into the required passage 10, thus engaging by friction in the constriction 9a. The filtered water flows through the central passage 22 of the counter-projection 20. The wall of this passage interferes with the actuating projection 14 of the plug, thus keeping it in the open position in which it is tilted away from the valve seat 12.

In a second embodiment shown in Fig. 3, the tubular counter-projection 30 has a tapered outer shell 32, the conical shape of which facilitates its insertion with interference into the constriction 9a of the passage 10.

In a third embodiment, shown in Fig. 4, the tubular counter-projection 40 has a cylindrical outer shell 42 in which is formed an annular channel 43 in which the constriction 9a of the passage 10 is housed, thus axially locking the counter-projection.

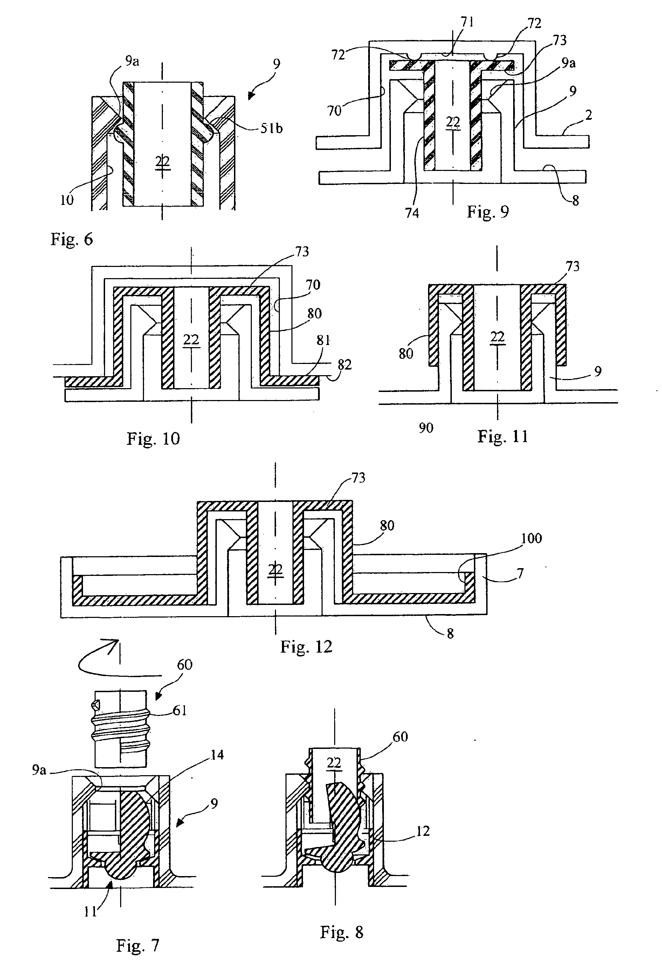

In Figures 5 and 6, a shoulder 51a,b is formed on the cylindrical outer shell of the counter-projection. When this shoulder has ridden over the constriction 9a of the passage 10, it axially locks the counter-projection which has been inserted into the passage 10.

In Figures 7 and 8, the device for disabling the selector members comprises a cylindrical tubular counter-projection 60, substantially of the same type as that shown in Figure 2, but having a helical thread 61 formed on its outer shell, by means of which the counter-projection is engaged by a male and female screw connection in the constriction 9a. This enables the degree of insertion of the counter-projection 60 into the required passage 10 to be adjusted if necessary to vary the flow rate of the selector member.

Figures 9 to 12 propose four technical solutions for the device according to the invention in which the counter-projection is retained in the operating position, when engaged in the passage 10 in a position such that it keeps the selector member 11 open, by interaction with various parts of the jug and/or of the cartridge.

In Figure 9, the cartridge 2 has a recess 70 whose base surface 71 has two or more bosses 72 or other spacing means on which a head 73, in the shape of a disc-like ring or similar, of the counter-projection 74 bears, in such a way that the head 73, by bearing on the bosses 72, is spaced apart from the base 71 of the recess 70, thus keeping the central passage 22 of the counter-projection 74 open.

In Fig. 10, the head 73 is extended by a cylindrical shell 80 coaxial with the tube 9 and terminates in a flange 81 which acts as a surface for bearing on the base surface 82 of the cartridge 2. In this case, it is possible (but not essential) for the cylindrical shell 80 to be spaced away from the surface of the tube 9.

In the example of Figure 11, however, the cylindrical shell 80 adheres to the tube 9, and the friction generated thereby, together with the interference between the tubular central part 90 of the counter-projection, serves to keep the device in the operating state.

The device of Figure 12 represents a development of the device of Figure 10, in which the flange 81 extends over the whole base wall 8 of the seat 4 of the cartridge and terminates in an annular projection 100 just inside the lateral wall 7.

It will be noted that, simply by inserting the device for disabling the selector members in such a way that the counter-projection interacts with the actuating projection 14 of the plug 13 to keep the latter open, the desired result is obtained regardless of the specific shape of the cartridge, and therefore the cartridge can be made in the desired shape for compatibility with other systems.

The device can be marketed individually or as part of a kit with a pack of cartridges or in a kit with the jug in which it is to be used.

The major benefits yielded by this include the fact that plugs which are closed by a spring system, in other words those biased by a spring and not simply by their own weight towards a normally closed position, can also be kept in the open position. This benefit is achieved because specific and effective means are provided to lock the counter-projection 20 in the operating position described in which the selector member is kept open. In addition, locking means allows to maintain steady the counter-projection in an operating position even when the cartridge is removed, in particular in the above mentioned case of plugs closed by a spring system, thus making the substitution of the cartridge easier.

## Claims

1. A kit comprising a percolating filter system (1) including a seat (4) for housing a replaceable filter cartridge (2) and a flow shut-off selector member (11) designed to shut off the flow filtered by the cartridge (2) during a required passage (10) of the flow through said seat (4), said selector member (11) including a plug (13) and an actuating projection (14) for the purpose of opening said plug (13), the kit also comprising a device for disabling the flow shut-off selector member (11) of the percolating filter systems (1), said device comprising a counter-projection (30; 40; 50; 60) in a tubular form structurally independent of the cartridge (2), the device being shaped in such a way that said counter-projection (30; 40; 50; 60) can be inserted into said required passage (10) and retained therein in a condition of interference with the projection (14) of the plug (13) in such a way that the projection (14) is inserted in said tubular counter-projection (30; 40; 50; 60) keeping the plug (13) in the open position regardless of the presence or absence of said cartridge (2) in said seat (4), **characterized in that** it further comprises axial locking means (32; 43; 51a; 51b; 61) at an external lateral surface of said tubular counter-projection (30; 40; 50; 60) apt to engage at a constriction area (9a) in the required passage (10) so as to provide an axial lock acting in at least one direction between said device and the required passage (10).

2. The kit according to Claim 1, wherein the seat (2) is formed in a divider element (3) between the collecting bowl for the liquid to be filtered (101) and a collecting bowl for the filtered liquid (102), and the required passage (10) is formed in a tube (9) extending from a wall of the seat (2) towards the inside thereof.

3. The kit according to Claim 1 or 2, wherein said locking means is provided by a tapered outer shell (32) of said tubular counter-projection (30), so as to provide frictional locking by interference between the counter-projection (30) and said constriction area (9a) of the required passage (10).

4. The kit according to Claim 1 or 2, wherein said locking means (61) comprise a male and female screw locking system defined between the counter-projection (60) and said constriction area (9a) of the required passage (10).

5. The kit according to Claim 3, wherein said blocking means comprise a system for bearing against a stop between the counter-projection (30; 40; 50; 60) and said constriction area (9a) of the required passage (10).

6. The kit according to any of the preceding claims and further comprising at least one percolating filter cartridge (2).

## Patentansprüche

1. Set, umfassend ein Tropfkörpersystem (1) mit einem Sitz (4) zum Aufnehmen einer austauschbaren Filterpatrone (2) und einem Strömungs-Absperr-Auswahlelement (11), das zum Absperren der durch die Patrone (2) gefilterten Strömung während einem erforderlichen Durchgang (10) der Strömung durch den Sitz (4) ausgelegt ist, wobei das Auswahlelement (11) einen Stopfen (13) und einen Betätigungsvorsprung (14) zum Zwecke des Öffnens des Stopfens (13) aufweist, wobei die Einrichtung außerdem eine Vorrichtung zum Deaktivieren des Strömung-Absperr-Auswahlelements (11) des Tropfkörpersystems (1) aufweist, wobei die Vorrichtung einen Gegenvorsprung (30; 40; 50; 60) in einer Schlauchform strukturell unabhängig von der Patrone (2) aufweist, wobei die Vorrichtung derart geformt ist, dass der Gegenvorsprung (30; 40; 50; 60) in den erforderlichen Durchgang (10) einsetzbar ist und darin in einem Eingriffszustand mit dem Vorsprung (14) des Stopfens (13) derart gehalten wird, dass der Vorsprung (14) in den schlauchförmigen Gegenvorsprung (30; 40; 50; 60) eingefügt wird, wobei der Stopfen (13) ungeachtet der Anwesenheit oder Abwesenheit der Patrone (2) im Sitz (4) in der offenen Positionen gehalten wird, **dadurch gekennzeichnet, dass** dieses ferner eine axiale Verriegelungseinrichtung (32; 43; 51a; 51b; 61) an einer äußeren Seitenfläche des schlauchförmigen Gegenvorsprungs (30; 40; 50; 60) aufweist, die zum Eingriff in einen Einschnürungsbereich (9a) in dem erforderlichen Durchgang (10) geeignet ist, um eine axiale Verriegelung bereitzustellen, die zumindest in einer Richtung zwischen der Vorrichtung und dem erforderlichen Durchgang (10) wirksam ist.

2. Set nach Anspruch 1, wobei der Sitz (2) in einem Teilerelement (3) zwischen der Auffangschale für die zu filternde Flüssigkeit (101) und einer Auffangschale für die gefilterte Flüssigkeit (102) ausgebildet ist, und der erforderliche Durchgang (10) in einem Rohr (9) ausgebildet ist, das sich von einer Wand des Sitzes (2) zu dessen Innenseite erstreckt.

3. Set nach Anspruch 1 oder 2, wobei die Verriegelungseinrichtung mit einer verjüngten Außenschale (32) des schlauchförmigen Gegenvorsprungs (30) versehen ist, um einen Reibschluss durch einen Eingriff zwischen dem Gegenvorsprung (30) und dem Einschnürungsbereich (9a) des erforderlichen Durchgangs (10) bereitzustellen.

4. Set nach Anspruch 1 oder 2, wobei die Verriegelungseinrichtung (61) ein Außengewinde- und Innengewinde-Verriegelungssystem aufweist, das zwischen dem Gegenvorsprung (60) und dem Einschnürungsbereich (9a) des erforderlichen Durchgangs (10) definiert ist.

5. Set nach Anspruch 3, wobei die Verriegelungseinrichtung ein System zur Anlage an einem Anschlag zwischen dem Gegenvorsprung (30; 40; 50; 60) und dem Einschnürungsbereich (9a) des erforderlichen Durchgangs (10) aufweist.

6. Set nach einem der vorhergehenden Ansprüche, das zumindest eine Tropfkörper-Patrone (2) aufweist.

## Revendications

1. Kit comprenant un système de filtre de percolation (1) comprenant un siège (4) pour loger une cartouche de filtre remplaçable (2) et un élément sélecteur d'arrêt d'écoulement (11) conçu pour arrêter l'écoulement filtré par la cartouche (2) pendant un passage requis (10) de l'écoulement à travers ledit siège (4), ledit élément sélecteur (11) comprenant un obturateur (13) et une saillie d'actionnement (14) afin d'ouvrir ledit obturateur (13), le kit comprenant également un dispositif pour désactiver l'élément sélecteur d'arrêt d'écoulement (11) des systèmes de filtre de percolation (1), ledit dispositif comprenant une contre-saillie (30 ; 40 ; 50 ; 60) sous une forme tubulaire structurellement indépendante de la cartouche (2), le dispositif étant formé de sorte que ladite contre-saillie (30 ; 40 ; 50 ; 60) peut être insérée dans ledit passage requis (10) et retenue à l'intérieur de ce dernier dans une condition d'interférence avec la saillie (14) de l'obturateur (13) de sorte que la saillie (14) est insérée dans ladite contre-saillie tubulaire (30 ; 40 ; 50 ; 60) maintenant l'obturateur (13) dans la position ouverte indépendamment de la présence ou de l'absence de ladite cartouche (2) dans ledit siège (4), **caractérisé en ce qu'**il comprend en outre des moyens de verrouillage axial (32 ; 43 ; 51a ; 51b ; 61) au niveau d'une surface latérale externe de ladite contre-saillie tubulaire (30 ; 40 ; 50 ; 60) aptes à se mettre en prise sur une zone de restriction (9a) dans le passage requis (10) afin de fournir un verrouillage axial agissant dans au moins une direction entre ledit dispositif et le passage requis (10).

2. Kit selon la revendication 1, dans lequel le siège (2) est formé en un élément de division (3) entre le bol de collecte pour le liquide à filtrer (101) et un bol de collecte pour le liquide filtré (102), et le passage requis (10) est formé en un tube (9) s'étendant à partir d'une paroi du siège (2) vers son intérieur.

3. Kit selon la revendication 1 ou 2, dans lequel lesdits moyens de blocage sont fournis par une coque externe progressivement rétrécie (32) de ladite contre-saillie tubulaire (30), afin de fournir le blocage par friction par interférence entre la contre-saillie (30) et ladite zone de restriction (9a) du passage requis (10).

4. Kit selon la revendication 1 ou 2, dans lequel lesdits moyens de blocage (61) comprennent un système de blocage de vis mâle et femelle défini entre la contre-saillie (60) et ladite zone de restriction (9a) du passage requis (10).

5. Kit selon la revendication 3, dans lequel lesdits moyens de blocage comprennent un système pour s'appuyer contre une butée entre la contre-saillie (30 ; 40 ; 50 ; 60) et ladite zone de restriction (9a) du passage requis (10).

6. Kit selon l'une quelconque des revendications précédentes, et comprenant en outre au moins une cartouche de filtre de percolation (2).
